(19) Europäisches Patentamt
European Patent Office
Office européen des brevets

(11) **EP 3 133 393 B1**

(12) **FASCICULE DE BREVET EUROPEEN**

(45) Date de publication et mention de la délivrance du brevet:
**21.03.2018 Bulletin 2018/12**

(51) Int Cl.:
***G01N 30/86*** *(2006.01)*

(21) Numéro de dépôt: **16184771.0**

(22) Date de dépôt: **18.08.2016**

(54) **PROCÉDÉ D'ESTIMATION D'UNE QUANTITÉ DE PARTICULES RÉPARTIES EN CLASSES, À PARTIR D'UN CHROMATOGRAMME**

VERFAHREN ZUM ABSCHÄTZEN DER MENGE VON IN KLASSEN AUFGETEILTEN TEILCHEN MITHILFE EINES CHROMATOGRAMMS

METHOD FOR ESTIMATING AN AMOUNT OF PARTICLES DISTRIBUTED INTO CLASSES, FROM A CHROMATOGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2015 FR 1557847**

(43) Date de publication de la demande:
**22.02.2017 Bulletin 2017/08**

(73) Titulaire: **Commissariat à l'énergie atomique et aux énergies alternatives
75015 Paris (FR)**

(72) Inventeurs:
• **HARANT, Olivier
38120 Saint-Égrève (FR)**
• **BERTHOLON, François
38700 La Tronche (FR)**
• **GRANGEAT, Pierre
38330 Saint-Ismier (FR)**

(74) Mandataire: **GIE Innovation Competence Group
310, avenue Berthelot
69372 Lyon Cedex 08 (FR)**

(56) Documents cités:
**EP-A1- 2 028 486     EP-A1- 2 509 018
FR-A1- 2 984 509**

• **SAER SAMANIPOUR ET AL: "Analyte quantification with comprehensive two-dimensional gas chromatography: Assessment of methods for baseline correction, peak delineation, and matrix effect elimination for real samples", JOURNAL OF CHROMATOGRAPHY, vol. 1375, 1 janvier 2015 (2015-01-01), pages 123-139, XP055281107, NL ISSN: 0021-9673, DOI: 10.1016/j.chroma.2014.11.049**
• **N.J. NIELSEN ET AL: "Chemometric analysis of gas chromatography with flame ionisation detection chromatograms: A novel method for classification of petroleum products", JOURNAL OF CHROMATOGRAPHY, vol. 1238, 1 mai 2012 (2012-05-01), pages 121-127, XP055280947, NL ISSN: 0021-9673, DOI: 10.1016/j.chroma.2012.03.062**

**Description**

**DOMAINE TECHNIQUE**

Le domaine technique de l'invention est la chromatographie en phase liquide ou gazeuse. Il s'agit plus particulièrement d'un procédé permettant l'interprétation d'un chromatogramme.

**ART ANTERIEUR**

L'utilisation de la chromatographie est une technique très répandue pour l'analyse d'espèces chimiques en milieu liquide ou gazeux. Cette technique d'analyse est basée sur des colonnes de chromatographie, dont le fonctionnement est bien connu : une particule parcourt un canal, entre une entrée et une sortie, en étant portée par un fluide, dit fluide porteur, également désigné par le terme phase mobile. La paroi du canal comporte un revêtement, appelé phase stationnaire, avec lequel la particule présente une affinité, de telle sorte que la particule est apte à être momentanément adsorbée, puis désorbée. En fonction de l'affinité avec la phase stationnaire, le parcours de la particule à travers le canal peut être plus ou moins long. Une colonne de chromatographie comporte également un détecteur, placé à la sortie du canal, pour détecter la présence de la particule lorsque cette dernière sort du canal.

Généralement, le signal détecté par le détecteur prend la forme d'un histogramme représentant le nombre de détections en fonction du temps, cet histogramme étant désigné par le terme chromatogramme.

Lorsqu'un échantillon, contenant des particules de différentes espèces, est injecté en même temps dans une colonne, le temps de parcours de chaque particule dépend de son affinité avec la phase stationnaire, cette dernière dépendant de l'espèce chimique de la particule. Aussi, le chromatogramme présente différents pics, chaque pic représentant le temps de parcours de particules de la même espèce dans la colonne.

A partir d'un chromatogramme, des algorithmes d'inversion permettent d'estimer les quantités des particules de chaque espèce, dans l'échantillon, à partir de chaque pic. La demande EP2028486 décrit par exemple un algorithme d'inversion par inférence Bayésienne, basé sur un modèle analytique d'une colonne de chromatographie. Chaque pic est considéré comme une densité de probabilité, dont la variable aléatoire est le temps de rétention de chaque particule associée à ce pic. Un chromatogramme est alors considéré comme une somme de réponses impulsionnelles, pondérée par la concentration de chaque type de particule composant les différents pics. Autrement dit, le chromatogramme $S$ peut être modélisé par $S(t) = \sum_{k=1}^{M} C_k p(t, \boldsymbol{\theta}_k)$ où $M$ est le nombre d'espèces de particules dans l'échantillon, $C_k$ est la concentration de particules de chaque espèce k, t représente le temps et $\theta_k$ est un vecteur des paramètres de la densité de probabilité modélisant le pic k.

Le brevet européen EP2509018 décrit un procédé analogue, introduisant une dépendance probabiliste des paramètres modélisant le chromatogramme, définissant un modèle probabiliste hiérarchique

Les inventeurs ont proposé une alternative à ces procédés d'inversion, permettant d'estimer la concentration de tous les composants d'un mélange, sans a priori sur leur nombres, ni sur la forme des pics du chromatogramme.

**EXPOSE DE L'INVENTION**

Un objet de l'invention est un procédé d'estimation d'une quantité de particules présentes dans un échantillon, selon la revendication 1. L'étape c) peut comporter l'établissement d'un vecteur d'état, dont chaque terme représente une classe d'appartenance d'un temps de rétention, le vecteur d'état étant actualisé à chaque itération.

Selon un mode de réalisation, le nombre de classes est ajusté à chaque itération. Selon un autre mode de réalisation, le nombre de classes est fixé à une valeur pré-établie.

L'étape c) peut comporter une étape de recherche d'une classe vide, ne comportant aucun temps de rétention, une telle classe étant alors supprimée.

Selon un mode de réalisation, l'étape c) est effectuée par inférence bayésienne, et notamment par inférence bayésienne non paramétrique.

Lors de l'étape c), la pluralité des temps de rétention peut être modélisée selon un modèle de mélange de processus de Dirichlet, le modèle étant paramétré par la distribution de base et par un facteur d'échelle. Le facteur d'échelle peut être distribué selon une loi paramétrique, sa valeur étant inférée à chaque itération par tirage selon ladite loi paramétrique.

Lors de chaque itération, l'étape c) peut comporter une détermination, pour chaque temps de rétention, d'une probabilité a posteriori d'appartenance à chaque classe préalablement définie. La classification peut alors être réalisée par un tirage selon une loi multinomiale dont les paramètres comprennent lesdites probabilités a posteriori. La détermination de la probabilité a posteriori d'appartenance à chaque classe préalablement définie peut comporter la détermination :

- de lois de probabilités a priori d'appartenance de la particule à chaque classe préalablement définie, connaissant les classes respectives des autres particules ;
- de lois de probabilités a posteriori d'observation du temps de rétention de ladite particule connaissant les temps de rétention des autres particules, ainsi que leurs classes respectives, chaque probabilité étant successivement calculée en considérant que ladite particule appartient à chaque classe.

Lors de chaque itération, l'étape c) peut comporter, pour chaque temps de rétention, le calcul d'une probabilité a posteriori d'appartenance à une classe supplémentaire par rapport aux classes préalablement définies. Dans ce cas, la détermination de ladite probabilité a posteriori d'appartenance à une classe supplémentaire peut comporter le calcul :

- d'une loi de probabilité a priori d'appartenance de ladite particule à une classe supplémentaire par rapport aux classes préalablement définies, connaissant les classes respectives des autres particules ;
- d'une loi de probabilité a posteriori d'observation du temps de rétention de ladite particule connaissant les temps de rétention des autres particules ainsi que leurs classes respectives, cette probabilité étant calculée en considérant que ladite particule appartient à ladite classe supplémentaire.

Dans un mode de réalisation, le procédé comporte une étape e) d'estimation d'une quantité ou d'une proportion de particules dans l'échantillon à partir des quantités ou proportions estimées lors de l'étape d). Cette étape peut comprendre une estimation des paramètres d'au moins une classe à partir des paramètres estimés lors de l'étape d).
Dans un mode de réalisation, le procédé comporte une étape f) d'identification d'au moins une classe cible, correspondant à une particule déterminée a priori, dite particule cible, à chaque particule cible étant associée une distribution de temps de rétention dont des paramètres sont connus, l'identification étant réalisée au moyen d'une comparaison entre au moins un paramètre associé à chaque classe et au moins desdits paramètre associé à ladite particule cible.
Un autre objet de l'invention est un support d'enregistrement d'informations, selon la revendication 15. Un autre objet de l'invention est un dispositif d'analyse d'un échantillon liquide ou gazeux, comportant une pluralité de particules, selon la revendication 16.
L'invention sera mieux comprise à travers les exemples décrits ci-après, lesquels s'appuient sur les figures suivantes.

## FIGURES

La figure 1 représente un dispositif permettant la mise en oeuvre de l'invention.
La figure 2 représente un chromatogramme. L'axe des abscisses correspond au temps de rétention ; l'axe des ordonnées correspond à l'amplitude du signal d'un détecteur disposé à la sortie de la colonne, représentant le nombre de molécules détectées à chaque temps de rétention.
La figure 3 représente le modèle statistique hiérarchique du mode de réalisation décrit.
La figure 4A représente les principales étapes d'un procédé selon un mode de réalisation selon l'invention. Les figures 4B et 4C représentent respectivement des sous-étapes de ce procédé.
La figure 5A représente un exemple de chromatogramme réalisé en utilisant un échantillon test.
La figure 5B représente les résultats de la classification des molécules présentes dans l'échantillon test, à partir du chromatogramme représenté sur la figure 5A, au fur et à mesure des itérations de l'algorithme.

## EXPOSE DE MODES DE REALISATION PARTICULIERS

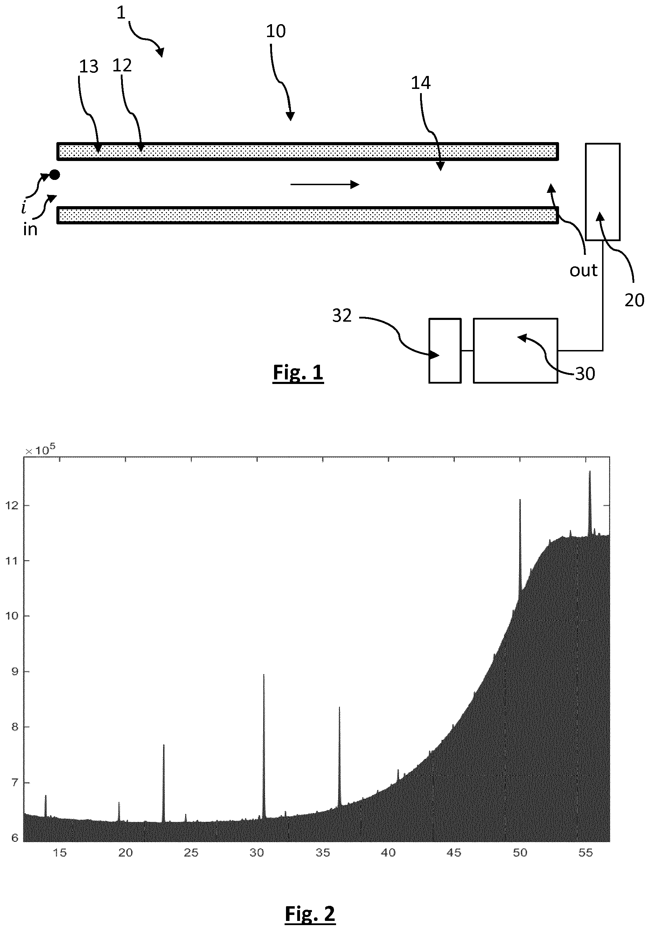

La figure 1 représente une colonne de chromatographie 1, comportant un canal 10 et un détecteur 20. La paroi du canal 10 comporte un revêtement 12, dit phase stationnaire 13. Le canal comporte également une partie centrale 14 dans lequel un fluide porteur est apte à circuler, entre une entrée in et une sortie out.
Le fluide porteur peut être un gaz ou un liquide, dont l'affinité avec la phase stationnaire 13 est négligeable, si bien que le fluide porteur n'interagit pas avec la phase stationnaire durant son parcours dans la colonne. Son temps de parcours dans la colonne, c'est-à-dire entre l'entrée et la sortie de la colonne, est désigné par le terme temps mort, et noté $t_0$. Ce temps mort $t_0$ correspond au temps de parcours d'une particule n'interagissant pas avec la phase stationnaire.
Une analyse consiste à introduire un échantillon à analyser comportant un mélange de particules de différentes espèces, chaque molécule $i$ d'espèce $k$ ayant une concentration $C_k$ dans l'échantillon. L'échantillon à analyser peut être

3

liquide ou gazeux. A la sortie du canal est placé un détecteur 20, apte à émettre un signal représentatif du nombre de particules sortant de la colonne en fonction du temps. Ce signal correspond au chromatogramme évoqué dans la description de l'art antérieur. La chromatographie vise alors à identifier les différentes espèces constituant l'échantillon et à déterminer leurs quantités, proportions ou concentrations.

Par particule, on entend une molécule, une protéine ou un peptide, un complexe de molécules, un agrégat de molécules, une nanoparticule. Dans la suite de la description, chaque particule est une molécule.

Par espèce d'une particule, on entend l'espèce chimique ou biologique de ladite particule.

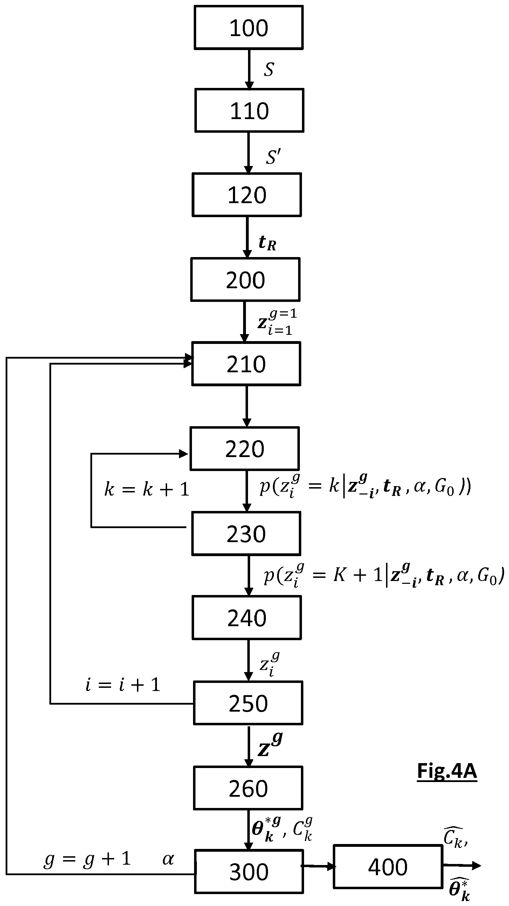

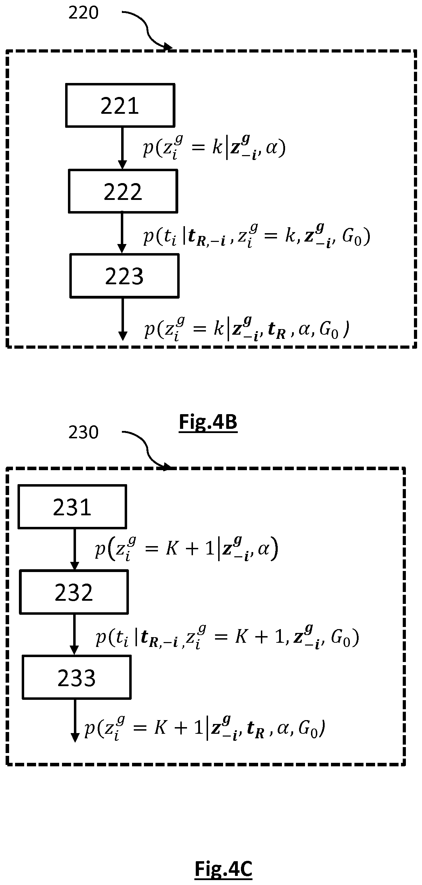

Le détecteur 20 est apte à être connecté à un processeur 30, ce dernier étant relié à une mémoire 32 comportant des instructions, ces dernières pouvant être exécutées par le processeur 30, pour mettre en oeuvre le procédé représenté sur les figures 4A, 4B et 4C, et décrit ci-après. Ces instructions peuvent être sauvegardées sur un support d'enregistrement, lisible par un processeur, de type disque dur, CDROM ou autre type de mémoire.

La figure 2 représente un exemple de chromatogramme S généré par le détecteur 20. Le chromatogramme se présente sous la forme d'un histogramme des temps de rétention, chaque canal t de l'histogramme représentant un intervalle de temps de rétention [t, t+δt]. Le chromatogramme correspond à une distribution discrète des temps de rétention du mélange. L'objectif de l'invention est d'obtenir, à partir de ce chromatogramme, une classification des temps de rétention en différentes classes, chaque classe étant considérée comme représentative d'une espèce de molécule, puis d'estimer une quantité (ou une proportion) de molécules appartenant à chaque classe.

Contrairement aux procédés de l'art antérieur l'estimation d'une quantité de molécules à partir de chaque pic n'est pas réalisée par inférence bayésienne basée sur un modèle analytique de la réponse impulsionnelle. Un aspect notable de l'invention est la constitution d'une liste de $N$ temps de rétention $t_i$ de molécules individuelles $i$, par tirage aléatoire selon le chromatogramme $S$, à partir de laquelle on effectue une classification de chaque temps de rétention, pris individuellement, selon une classe $k$, sans a priori sur le nombre de classes. La classification est réalisée par inférence bayésienne, notamment une inférence bayésienne non paramétrique, en considérant que chaque temps de rétention $t_i$ d'une molécule $i$ appartient à une classe $k$ parmi $K$ classes, avec $1 \leq k \leq K$, et que les temps de rétention $t_i$ d'une même classe $k$ sont distribués selon une distribution de probabilité des temps de rétention $p(t\,;\,\boldsymbol{\theta}_k^*)$, de paramètres $\boldsymbol{\theta}_k^*$. Le nombre de classes $K$ est connu a priori ou non.

Chaque temps de rétention $t_i$ présent dans la liste correspond au temps de rétention d'une molécule individuelle $i$. Autrement dit, la constitution de la liste correspond à un sondage d'une population de temps de rétention constituant le chromatogramme. Le nombre $N$ de temps de rétention constituant la liste est prédéterminé, et est de préférence suffisamment élevé pour que la population des temps de rétention de la liste soit représentative de l'échantillon. La classification de chaque temps de rétention $t_i$ revient à classifier la molécule $i$ à laquelle il est associé. Ce nombre peut être supérieur à 100 ou supérieur à 1000.

Chaque temps de rétention $t_i$ de la liste est distribué selon un mélange de $K$ distributions de probabilités $p(t_i\,;\,\boldsymbol{\theta}_k^*)$, de telle sorte que $t_i \sim \sum_{k=1}^{K} C_k p(t_i\,;\,\boldsymbol{\theta}_k^*)$, $C_k$ représentant une quantité ou une proportion de molécules dans une classe $k$. Il peut notamment s'agir d'une proportion de molécules dans une classe par rapport à l'ensemble des molécules constituant la liste. Le seigle $\sim$ signifie « est distribué selon ».

Certaines distributions de probabilité $p(t\,;\,\boldsymbol{\theta}_k^*)$ peuvent correspondre à du bruit. Aussi, la classification peut établir une ou plusieurs classes représentatives de bruits.

L'objectif de l'inversion est de déterminer, à partir de la liste de $N$ temps de rétention $t_i$, $1 \leq i \leq N$, la classe $k$ à laquelle appartient chaque temps de rétention composant la liste. La variable $z_i$ représente la classe d'appartenance de chaque temps de rétention $t_i$. Comme précédemment décrit, le nombre de classes $K$ peut ne pas être défini a priori, et est alors déterminé lors du processus de classification.

Selon un mode de réalisation, l'inversion est réalisée selon un modèle bayésien non paramétrique, le mélange des temps de rétention de la liste étant modélisé par un Modèle de Mélange de Processus de Dirichlet, connu par l'acronyme anglais DPMM, signifiant « Dirichlet Process Mixture Model ». On suppose que toutes les classes sont caractérisées par la même famille paramétrique de lois. Les paramètres associés à chaque classe $k$ forment un vecteur $\boldsymbol{\theta}_k^*$. Les vecteurs $\boldsymbol{\theta}_k^*$ suivent une distribution $G_0$ dite distribution de base. La distribution de base $G_0$ est à considérer comme un hyper-paramètre, c'est-à-dire un paramètre fixe.

Les DPMM sont également paramétrés par un facteur d'échelle $\alpha$. Ce facteur d'échelle est un scalaire positif. Il conditionne le nombre de classes prises en compte lors de l'inférence. En effet, si $N$ représente le nombre de données à classifier, en l'occurrence le nombre de temps de rétention $t_i$ formant la liste, et $K$ représente le nombre de classes,

$E(K|\alpha,N) \approx \alpha \log(1 + \frac{N}{\alpha})$ où $E$ désigne l'espérance mathématique, le symbole $\approx$ signifiant « étant approximé par ». Selon les modes de réalisation, le facteur d'échelle $\alpha$ peut être considéré comme fixe ou comme une variable aléatoire dont la valeur est estimée lors de chaque itération de l'inférence.

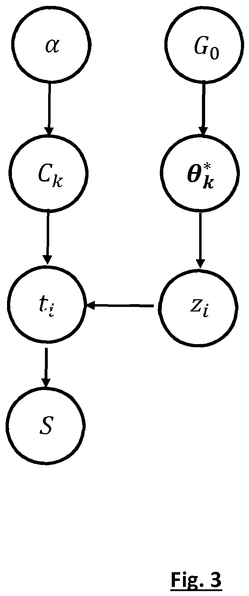

La figure 3 est une représentation du modèle statistique, faisant apparaître la succession hiérarchique du modèle :

- $G_0$ et $\alpha$ sont les paramètres du DPMM précédemment décrits. Dans l'exemple décrit, $\alpha$ suit une loi de probabilité gamma ;

- $\boldsymbol{\theta}_k^*$ représente le vecteur de paramètres de la distribution des temps de rétention associée à la classe $k$, ce vecteur étant distribué selon la distribution de base $G_0 : \boldsymbol{\theta}_k^* \sim G_0$.

- $\boldsymbol{C}$ est un vecteur de dimension $(K,1)$, dont chaque terme $C_k$ représente, dans cet exemple une proportion, de molécules dans la classe $k$ ; $\boldsymbol{C}$ est distribué selon une distribution de Dirichlet de paramètres $(\frac{\alpha}{K} \dots \dots \frac{\alpha}{K})$. Dans cet exemple, $C_k \in [0,1]$ et $\sum C_k = 1$

- $\boldsymbol{z}$ est un vecteur, de dimension $(N,1)$, dont chaque terme $z_i$ représente la classe du temps de rétention $t_i$ d'une molécule $i$,. Chaque terme $z_i$ est distribué selon une loi multinomiale paramétrée par le vecteur $\boldsymbol{C}$ de telle sorte que $z_i/\boldsymbol{C} \sim Multinomial(C_1 \dots \dots C_K)$. L'inférence Bayésienne non paramétrique basée sur les DPMM vise à déterminer ce vecteur $\boldsymbol{z}$, dit vecteur d'état, au cours d'un procédé itératif. Chaque itération $g$ effectue une mise à jour de ce vecteur d'état notée $\boldsymbol{z}^g$.

- $\boldsymbol{t_R}$ est un vecteur, de dimension $(N, 1)$, dont chaque terme est un temps de rétention $t_i$ d'une molécule individuelle $i$. $N$ désigne le nombre de temps de rétention $t_i$ considérés. Chaque temps de rétention est distribué de telle sorte que $t_i|\boldsymbol{C} \sim \sum_{k=1}^{K} C_k p(t_i|\boldsymbol{\theta}_k^*)$.

- $S$ représente le chromatogramme. Si $S^*$ désigne le chromatogramme normalisé :

$$S^* = \frac{S}{\int S} = p(t_i|\boldsymbol{C}, \boldsymbol{\Theta}) = \sum_{k=1}^{K} C_k \, p(t_i|\boldsymbol{\theta}_k^*)$$

où $\boldsymbol{\Theta} = [\boldsymbol{\theta}_1^* \dots \boldsymbol{\theta}_K^*]$.

Selon ce mode de réalisation, chaque densité de probabilité associée à un temps de rétention $t_i$ est une gaussienne, de telle sorte que $p(t_i|\boldsymbol{\theta}_k^*) = \mathcal{N}(t_i ; \mu_k, \sigma^2_k)$ ou $\mu_k$ et $\sigma^2_k$ désignent respectivement la moyenne et la variance du temps de rétention $t_i$ des molécules de la classe k.

La distribution de base $G_0$ des paramètres $\mu_k, \sigma^2_k$ peut être une distribution normale inverse gamma, telle que $(\mu_k, \sigma^2_k) \sim G_0 = \mathcal{NIG}(m_0, \mathcal{K}_0, a_0, b_0,)$. La distribution de base $G_0$ est alors conjuguée à la distribution gaussienne des temps de rétention.

Si $\theta_i$ représente le vecteur de paramètres de la distribution du temps de rétention $t_i$, avec $\theta_i \in [\boldsymbol{\theta}_1^* \dots \boldsymbol{\theta}_K^*]$, $t_i|\theta_i \sim p(t_i|\theta_i)$ avec $\theta_i|\boldsymbol{G} \sim G$ et $G \sim DP(G_0, \alpha)$, $DP$ désignant un Processus de Dirichlet. Le processus aléatoire $G$ est une distribution discrète, définie par $G = \sum_{k=1}^{K} C_k \delta_{\theta_k^*}$, où $\delta_{\theta_k^*}$ désigne la distribution de Dirac en $\boldsymbol{\theta}_k^*$. La distribution $G$ définit un partitionnement, correspondant à une définition des paramètres de chaque classe ainsi qu'au nombre de classes considérées. Ce partitionnement peut être inconnu, le nombre de classes ainsi que leurs paramètres étant a priori inconnus. Il peut également être en partie connu, auquel cas le nombre de classes $K$ et/ou certains paramètres $\boldsymbol{\theta}_k^*$ de chaque classe sont connus.

Dans le mode de réalisation décrit, le partitionnement est aléatoire, et est actualisé lors de chaque itération.

On va à présent décrire, en lien avec la figure 4A, les principales étapes du procédé. Ces étapes sont regroupées en 3 phases :

- tirage des données observées : étapes 100 à 120 ;
- inférence selon une boucle de type Collapsed Gibbs Sampling : étapes 200 à 300, après une première itération d'initialisation ;
- sortie d'algorithme : étape 400.

Etape 100 : acquisition du signal. Cette étape correspond à l'acquisition d'un chromatogramme S.

Etape 110: pré-traitement du chromatogramme. Ce prétraitement comporte une étape de normalisation, afin d'obtenir un chromatogramme normalisé S* tel que précédemment défini, combiné à une étape de suppression de la ligne de base, selon des méthodes connues de l'homme du métier, pour obtenir un histogramme S'. Cette étape est facultative. Néanmoins, la suppression de la ligne de base est préférable pour améliorer la sensibilité de la méthode. Elle permet également de réduire le nombre de temps de rétention appartenant à une classe représentative du bruit. La suppression de la ligne de base peut être réalisée par extraction de la ligne de base, par exemple par une moyenne glissante, puis par la soustraction de la ligne de base extraite du signal brut.

Etape 120: extraction des temps de rétention. On effectue un tirage aléatoire, selon la distribution formée par le chromatogramme, éventuellement après normalisation et/ou suppression de la ligne de base. On constitue alors une liste de $N$ temps de rétention $t_i$, formant un vecteur des temps de rétention $\boldsymbol{t_R}$. Ce tirage aléatoire peut être obtenu par la méthode standard de la transformée inverse du signal S'.

Précisons que chaque temps de rétention peut avoir été préalablement soustrait du temps mort $t_0$ de la colonne, ce qui correspond à un temps de rétention dit ajusté.

Etape 200 : Inférence bayésienne afin d'affecter une classe à chaque temps de rétention $t_i$ du vecteur $\boldsymbol{t_R}$. L'inférence vise à établir le vecteur **z**, considéré comme un vecteur d'état, dont chaque terme $z_i$ représente l'indice de classe attribué à un temps de rétention $t_i$.

Il s'agit d'un processus itératif, réalisé selon une première boucle d'itération, chaque itération permettant d'établir un vecteur $\boldsymbol{z^g}$ de classification de chaque temps de rétention, l'exposant $g$ désignant le rang de l'itération. Ce vecteur d'état permet d'établir les quantités ou proportions de molécules $C_k^g$ dans chaque classe $k$ définie au cours de l'itération $g$. Il permet également d'établir un vecteur $\boldsymbol{\theta}_k^{*g}$ des paramètres de la loi de distribution du temps de rétention associée à chaque classe $k$ .

Avant la première itération, le processus est initialisé en considérant qu'il n'y a qu'une seule classe (K = 1). Au cours de la première itération ($g$ = 1), la classification est effectuée selon un procédé de type CRP (Chinese Restaurant Process, dit processus de restaurant chinois), connu de l'homme du métier.

Etape 210 : Pour chaque molécule $i$, associée à un temps de rétention $t_i$, on lance une deuxième boucle d'itération, l'indice d'itération étant l'indice de la molécule $i$. On constitue alors un vecteur $\boldsymbol{t_{R,-i}}$ correspondant au vecteur $\boldsymbol{t_R}$ des temps de rétention $t_i$ constitué lors de l'étape 120, auquel est retiré le temps rétention $t_i$ associé à l'indice $i$ considéré lors de cette étape.

Etape 220: on détermine une probabilité a posteriori de la molécule $i$, via son temps de rétention $t_i$, d'appartenir à chaque classe $k$ existante. Pour chaque classe, cette probabilité a posteriori s'écrit :

$$p(z_i^g = k | \boldsymbol{z}_{-i}^g, \boldsymbol{t_R}, \alpha, G_0) = p(z_i^g = k | \boldsymbol{z}_{-i}^g, \alpha) p(t_i | \boldsymbol{t_{R,-i}}, z_i^g = k, \boldsymbol{z}_{-i}^g, G_0) \quad (1)$$

où :

- $z_i^g$ représente l'indice de classe affectée au temps de rétention $t_i$ lors de l'itération $g$.
- $\boldsymbol{z}_{-i}^g$ est le vecteur d'affectation de l'ensemble des temps d'itération (vecteur d'état) à l'exception du temps courant $t_i$ lors de l'itération $g$.

$p(z_i^g = k | \boldsymbol{z}_{-i}^g, \alpha)$ représente une probabilité a priori d'appartenance à une classe $k$ existante. Lors de la première itération, cette probabilité est déterminée selon un processus du restaurant chinois, connu par l'homme du métier sous la dénomination Chinese Restaurant Process, ou par l'acronyme CRP :

- Lorsque $g$ = 1 (1ère itération) cette probabilité peut s'écrire $p(z_i^g = k | \boldsymbol{z}_{-i}^g, \alpha) = \frac{N_k}{i-1+\alpha}$ ;
- lorsque $g$ > 1 cette probabilité peut s'écrire

$$p\left(z_i^g = k \middle| \mathbf{z}_{-i}^g, \alpha\right) = \frac{N_k}{N-1+\alpha} \; . \; (2')$$

où $N_k$ est le nombre de molécules affectées à la classe $k$ lors de l'itération $g$ et $N$ représente le nombre de temps de rétention tirés lors de l'étape 120.

Lors de la première itération $g = 1$, pour la première molécule $i = 1$, $K = 1$. Le nombre de classes augmente alors au fur et à mesure que l'on considère les autres temps de rétention de la liste. $p\left(t_i \middle| \mathbf{t}_{R,-i}, z_i^g = k, \mathbf{z}_{-i}^g, G_0\right)$ représente une probabilité a posteriori d'observation du temps de rétention $t_i$, pouvant être écrite sous la forme d'un ratio de fonctions de vraisemblance selon l'égalité :

$$p(t_i \middle| \mathbf{t}_{R,-i}, z_i^g = k, \mathbf{z}_{-i}^g, G_0) = p(t_i \middle| \mathbf{t}_{k,-i}, G_0) = \frac{p(t_i, \mathbf{t}_{k,-i} \middle| G_0)}{p(\mathbf{t}_{k,-i} \middle| G_0)} = \frac{p(t_k \middle| G_0)}{p(\mathbf{t}_{k,-i} \middle| G_0)} \; (3)$$

où $\mathbf{t}_k$ et $\mathbf{t}_{k,-i}$ sont des vecteurs comportant les temps de rétention affectés à la classe $k$ obtenus respectivement en considérant et sans considérer le temps de rétention courant $t_i$.

Sachant que la distribution de base $G_0$ suit une loi inverse gamma $\mathcal{NIG}(m_0, \mathcal{K}_0, a_0, b_0,)$ on peut montrer que

$$p(\mathbf{t}_{k,-i} \middle| G_0) = \mathcal{T}\left(m_k, \frac{b_k(\mathcal{K}_k+1)}{\mathcal{K}_k a_k}, 2a_k\right) (3')$$

avec :

- $m_k = \frac{m_0 \mathcal{K}_0 + N_k \mu_k}{\mathcal{K}_0 + N_k}$,
- $\mathcal{K}_k = \mathcal{K}_0 + N_k$,
- $a_k = a_0 + \frac{N_k}{2}$,
- $b_k = b_0 + \frac{1}{2} \sum_{j=1}^{N_k} (t_j - \mu_k)^2 + \frac{N_k \mathcal{K}_0 (\mu_k - m_0)^2}{2(\mathcal{K}_0 + N_k)}$

où $\mu_k$ désigne la moyenne des temps de rétention de la classe $k$, le terme $\sum_{j=1}^{N_k} (t_j - \mu_k)^2$ étant déterminé pour chaque temps de *rétention* $t_j$ de la classe $k$.

La notation $\mathcal{T}(m_k, \frac{b_k(\mathcal{K}_k+1)}{\mathcal{K}_k a_k}, 2a_k)$ correspond à une loi de Student de moyenne $m_k$, de paramètre d'échelle $\frac{b_k(\mathcal{K}_k+1)}{\mathcal{K}_k a_k}$ à $2a_k$ degrés de liberté.

Ainsi, en lien avec la figure 4B, l'étape 220 comporte :

- une sous-étape 221 de calcul de $p\left(z_i^g = k \middle| \mathbf{z}_{-i}^g, \alpha\right)$ selon (2) ou (2');
- une sous-étape 222 de calcul de $p(t_i \middle| \mathbf{t}_{R,-i}, z_i^g = k, \mathbf{z}_{-i}^g, G_0)$ selon (3);
- une sous-étape 223 de calcul de $p\left(z_i^g = k \middle| \mathbf{z}_{-i}^g, \mathbf{t}_R, \alpha, G_0\right)$ selon (1), à partir de (2) ou (2') et (3).

L'étape 220 est répétée, pour la même molécule ($i$), pour les K classes, ce qui constitue une troisième boucle d'itération.

Etape 230 : Détermination d'une probabilité a posteriori d'appartenir à une nouvelle classe K+1, telle que

$$p(z_i^g = K + 1 \middle| \mathbf{z}_{-i}^g, \mathbf{t}_R, \alpha, G_0) = p\left(z_i^g = K + 1 \middle| \mathbf{z}_{-i}^g, \alpha\right) p\left(z_i^g = K + 1 \middle| \mathbf{z}_{-i}^g, \alpha, \mathbf{t}_R, G_0\right)$$
$$(4).$$

De façon analogue à l'étape 220, l'étape 230 comporte, en lien avec la figure 4C :

- une sous-étape 231 de calcul d'une probabilité a priori d'appartenance à la nouvelle classe K+1 $p\left(z_i^g = K + 1 \middle/ \mathbf{z}_{-i}^g, \alpha\right)$, telle que,

- lorsque

$$g = 1, p\left(z_i^g = K + 1 \middle| \mathbf{z}_{-i}^g, \alpha\right) = \frac{\alpha}{i-1+\alpha} \quad (5)$$

- lorsque

$$g > 1, p\left(z_i^g = K + 1 \middle| \mathbf{z}_{-i}^g, \alpha\right) = \frac{\alpha}{N-1+\alpha} \quad (5')$$

- une sous-étape 232 de calcul d'une probabilité a posteriori $p(t_i \middle| \mathbf{t}_{R,-i}, z_i^g = K + 1, \mathbf{z}_{-i}^g, G_0) = p(t_i|t_{k,-i}, G_0)$, en considérant que $p\left(t_i \middle| \mathbf{t}_{k,-i}, G_0\right) = \mathcal{T}\left(m_0, \frac{b_0(\mathcal{K}_0+1)}{ac_0}, 2a_0\right)$

- une sous-étape 233 de calcul de $p\left(z_i^g = K + 1 \middle| \mathbf{z}_{-i}^g, \mathbf{t}_R \alpha, G_0\right)$ selon (4).

<u>Etape 240</u> Classification du temps courant $t_i$.

Cette étape vise à attribuer une classe $k$ au temps courant $t_i$, autrement dit de définir le terme $z_i^g$ du vecteur $\mathbf{z}^g$ en fonction des probabilités a posteriori de la molécule $i$ d'appartenir à chaque classe $k$ existante $p(z_i^g = k | \mathbf{z}_{-i}^g, \mathbf{t}_R, \alpha, G_0)$ ou à une nouvelle classe $K + 1$ $p(z_i^g = K + 1 | \mathbf{z}_{-i}^g, \mathbf{t}_R, \alpha, G_0)$ respectivement estimées lors des étapes 220 et 230. $z_i^g$ est obtenu par tirage selon la distribution multinomiale de paramètres les K+1 probabilités $p(z_i^g = k | \mathbf{z}_{-i}^g, \alpha, \mathbf{t}_R, G_0)$ après normalisation de ces dernières, de telle sorte qu'après la normalisation, $\sum_{k=1}^{K+1} p(z_i^g = k | \mathbf{z}_{-i}^g, \alpha, \mathbf{t}_R, G_0) = 1$

<u>Etape 250</u> : Ajustement du nombre de classes. Il s'agit de tenir compte de la valeur de $z_i^g$ déterminée lors de l'étape précédente pour actualiser le nombre K de classes.

De même, au cours de cette étape d'ajustement, au-delà de la première itération, c'est-à-dire pour $g > 1$, toute classe vide est supprimée. Par classe vide, on entend une classe ne comportant aucun temps de rétention. Cela correspond par exemple au cas où le temps de rétention courant $t_i$, seul membre d'une classe, est affecté à une autre classe.

Les étapes 210 à 250 sont réitérées (deuxième boucle d'itération) pour chaque temps de rétention $t_i$ formant le vecteur $\mathbf{t}_R$.

<u>Etape 260</u> : Sortie de la deuxième itération. Connaissant le vecteur d'état $\mathbf{z}^g$, on peut établir les quantités ou les proportions $C_k^g$ des classes des molécules associées à l'itération $g$, ainsi que les paramètres $\boldsymbol{\theta}_k^{*g}$ de la loi de distribution du temps de rétention associée à chaque classe définie au cours d'une itération g.

<u>Etape 300</u> Tirage du facteur d'échelle.

Dans cet exemple, le facteur d'échelle $\alpha$ suit une loi gamma $\Gamma(a, b)$, $a$ et $b$ étant des réels strictement positifs. On introduit alors une variable aléatoire $\eta$, telle *que $\eta \sim Beta(\alpha + 1, N)$* et :

$$\alpha|\eta, K \sim \pi_\eta \Gamma(a + K, b - \log(\eta)) + (1 - \pi_\eta)\Gamma(a + K - 1, b - \log(\eta)) \quad (7)$$

où

$$\frac{\pi_\eta}{1-\pi_\eta} = \frac{(a+K-1)}{(N(b-\log(\eta)))}$$

Lors de chaque itération de $g$, on procède à un tirage de $\alpha$ selon (7).

Les étapes 210 à 300 sont réitérées (première boucle d'itération), de façon à ce que chaque itération de rang $g$ établisse un vecteur d'état $\mathbf{z}^g$. Ainsi, au cours de chaque itération, on met à jour le partitionnement des temps de rétention de la liste, c'est-à-dire le nombre de classes et leurs paramètres, ainsi que la classification de ces temps de rétention, c'est-à-dire l'affectation de chaque temps de rétention à une classe, ce qui correspond à une mise à jour du vecteur d'état $z^g$.

Les itérations cessent lorsqu'un critère d'arrêt est atteint. Ce critère d'arrêt peut être un nombre prédéterminé d'itérations ou l'atteinte d'un critère de convergence. Un tel critère de convergence peut être une mesure de l'évolution de la loi a posteriori du vecteur d'état au cours des itérations, l'itération étant arrêtée lorsque l'évolution de la loi a posteriori du vecteur d'état $z^g$ est considéré comme stable.

Etape 400 : Sortie d'algorithme. Connaissant le vecteur d'état $z^g$, on peut estimer les quantités ou des proportions $\widehat{C_k}$ des classes des molécules, ainsi que les paramètres $\widehat{\theta_k^*}$ de la loi de distribution du temps de rétention associée à chaque classe :

$$\widehat{C_k} = C_k^{g_f}$$

$$\widehat{\theta_k^*} = \theta_k^{*g}$$

où l''indice $g_f$ désigne la dernière itération.

Selon une variante, cette estimation n'est pas réalisée sur la base de la dernière itération $g_f$, mais sur la base d'une pluralité d'itérations, en considérant en particulier les indices g variant entre un indice $g_d$ correspondant à la fin d'un temps, dit temps de chauffe, et l'indice $g_f$ désignant la dernière itération. Le temps de chauffe correspond à l'instant où le processus de classification se stabilise.

Cette estimation peut être réalisée en calculant une valeur moyenne :

$$\widehat{C_k} = \frac{1}{g_f - g_d + 1} \sum_{g_d}^{g_f} C_k^g$$

$$\widehat{\theta_k^*} = \frac{1}{g_f - g_d + 1} \sum_{g_d}^{g_f} \theta_k^{*g}$$

Une autre option est de sélectionner le maximum a posteriori des variables aléatoires $C_k$, $\theta_k^{*g}$ à partir des $g_f$ - $g_d$ + 1 valeurs $C_k^g$, respectivement $\theta_k^{*g}$, pour g compris entre $g_d$ et $g_f$.

Connaissant les concentrations dans chaque classe, on peut en déduire les concentrations des molécules de chaque classe dans l'échantillon, en considérant que le nombre de temps de rétention constituant la liste est suffisamment élevé pour être représentatif de l'échantillon. Chaque classe est représentative d'une espèce de molécules.

Le procédé peut également permettre d'établir à partir des quantités de molécules dans chaque classe, les quantités de molécules dans l'échantillon, moyennant l'application d'un facteur correctif que l'on peut déterminer par calibrage.

Selon une variante, l'étape 400 comporte également une sous-étape de sélection de classes d'intérêt, ou de classes cibles parmi les classes identifiées par l'algorithme. Pour cela, on effectue une comparaison de paramètres $\widehat{\theta_k^*}$ des classes précédemment estimés avec un ou plusieurs paramètres $\theta_l$ connus d'une ou plusieurs classes, chaque classe correspondant à une molécule cible $l$. Le terme molécule cible désigne une molécule dont on souhaite déterminer la proportion ou la concentration dans le mélange. A chaque molécule cible $l$ est associée une distribution des temps de rétention dont un ou plusieurs paramètres $\theta_l$ sont connus. Ces paramètres peuvent être par exemple établis à partir des moments de ladite distribution. On compare alors les paramètres $\widehat{\theta_k^*}$ des classes obtenus au cours de l'étape 400 aux paramètres $\theta_l$ de chaque molécule cible, de façon à identifier la classe $k$ correspondant éventuellement à une molécule cible. On détermine alors une quantité de chaque molécule cible ainsi identifiée, et il alors possible d'effectuer une nouvelle normalisation de la quantité relativement à l'ensemble des classes correspondant à une molécule cible $l$,

de façon à établir une proportion des molécules cibles dans le mélange.

Les paramètres $\theta_l$ de la distribution des temps de rétention de chaque molécule cible sont préalablement déterminés, soit par apprentissage, soit par modélisation, soit par des essais expérimentaux. Ces paramètres sont par exemple une moyenne, des moments, ou d'autres paramètres statistiques.

Essais expérimentaux

Le procédé décrit ci-dessus a été appliqué sur un chromatogramme obtenu expérimentalement. Les conditions opératoires sont les suivantes :

- colonne capillaire de longueur 30 mètres, de diamètre 0.25 mm, dont la phase stationnaire, d'épaisseur 0.25 $\mu$m a la composition suivante : 5% phényle arylène, 95% diméthylepolysiloxane. On a appliqué un gradient de température de 5°C/min de 50°C à 300 °C. Le volume injecté est de 0.5 $\mu$L, à la pression de 12 psi, correspondant à un débit de 1mL/min.
- capteur de sortie : Capteur d'ionisation à Flamme, plus connu par dénomination anglophone Flame Ionisation Detector.
- échantillon analysé : solution de méthanol comportant 5 hydrocarbures aromatiques polycycliques (HAP) : Acenaphtène (ACE), Anthracène (ANT), Fluoranthène (FTN), BEnzo(a)pyrène (B(A)P) et L'inden(1,2,3-cd)pyrène (IND). La concentration de chacun de ces composés dans la solution est d'environ 100 $\mu$g/mL. Cet échantillon comprenait en outre un contaminant non prévu, référencé C1.

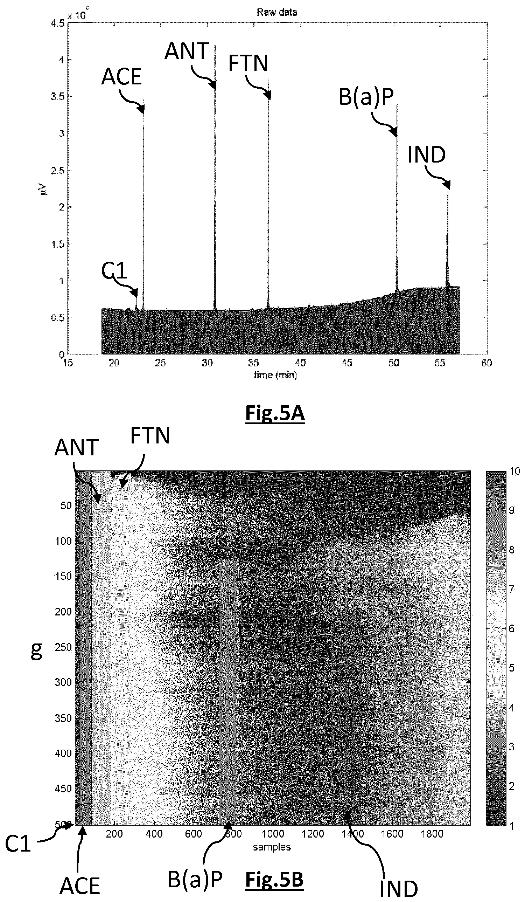

La figure 5A représente l'histogramme brut mesuré. La ligne de base n'a pas été soustraite. $N$ temps de rétention ($N$ = 2000) ont été tirés aléatoirement selon cet histogramme. Les 5 HAP apparaissent nettement sous la forme de pics, de même que le contaminant non prévu.

La figure 5B représente, sous forme de code couleur, la classe attribuée à chaque temps de rétention $t_i$, c'est-à-dire à chaque molécule, en fonction du nombre d'itérations $g$. On observe que :

- le nombre de classes augmente jusqu'à l'itération $g \approx 200$. La période correspondant à $1 \leq g \leq 200$ correspond à une période dite de chauffe, durant laquelle le nombre de classes évolue d'une itération à une autre.

- Lorsque $g > 200$, le nombre de classes est stabilisé à 10. L'affectation des classes est la suivante :

   Classe 1 : premier segment de ligne de base ;
   Classe 2 : Contaminant C1 ;
   Classe 3 : ANT ;
   Classe 4 : ACE ;
   Classe 5 : FTN ;
   Classe 6 : deuxième segment de ligne de base ;
   Classe 7 : quatrième segment de ligne de base ;
   Classe 8 : troisième segment de ligne de base
   Classe 9 : B(a)P
   Classe 10 : IND

On retrouve bien les 5 HAP. Les autres classes partitionnant l'histogramme correspondent au contaminant non prévu, ainsi qu'à 4 segments de la ligne de base, assimilables à du bruit, s'étendant entre les pics des HAP.

Outre une classification des molécules constituant l'échantillon, le procédé permet également la détection de contaminants, ainsi que la discrimination de segments de la ligne de base.

L'algorithme permet également de déterminer les paramètres $\theta_k^*$ des distributions associées à chaque classe, c'est-à-dire à chaque espèce de molécule.

Bien que décrit en lien avec l'analyse de molécules gazeuses, l'invention peut être mise en oeuvre en milieu liquide, ou pour l'analyse de particules biologiques, par exemple des protéines ou des peptides.

**Revendications**

**1.** Procédé d'estimation d'une quantité de particules présentes dans un échantillon, comportant les étapes suivantes :

a) faire passer l'échantillon à travers une colonne de chromatographie, la colonne comportant un détecteur apte à détecter lesdites particules, le détecteur délivrant un chromatogramme représentant le nombre de particules détectées en fonction d'un temps de rétention, représentatif du temps passé par chaque particule dans la colonne ;

b) constituer une liste comportant une pluralité de temps de rétention, chaque temps de rétention étant associé à une particule individuelle, la liste étant établie par tirage aléatoire à partir du chromatogramme ;

c) effectuer une classification de chaque temps de rétention de la liste selon une pluralité de classes, à chaque classe étant associée une distribution a priori des temps de rétention $\left(p\left(t\,;\,\boldsymbol{\theta}_k^{*g}\right)\right)$ définie par des paramètres $\left(\boldsymbol{\theta}_k^{*g}\right)$, les paramètres $\left(\boldsymbol{\theta}_k^{*g}\right)$ étant distribués selon une distribution de base ($G_0$) prédéterminée, l'étape c) comportant une détermination, pour chaque temps de rétention ($t_i$), d'une probabilité a posteriori d'appartenance à chaque classe $p(z_i^g = k | \boldsymbol{z}_{-i}^g, \boldsymbol{t}_R, \alpha, G_0)$ ;

d) estimer une quantité ou une proportion $\left(C_k^g\right)$ de particules dont le temps de rétention est classifié selon au moins une des classes (1 ... k ... K) définies lors de l'étape c) ;

les étapes c) à d) étant réalisées de façon itérative, jusqu'à l'atteinte d'un critère d'arrêt.

2. Procédé selon la revendication 1 dans lequel l'étape c) comporte l'établissement d'un vecteur d'état ($\boldsymbol{z}^g$), dont chaque terme $\left(z_i^g\right)$ représente une classe d'appartenance d'un temps de rétention ($t_i$), ledit vecteur d'état étant actualisé à chaque itération ($g$).

3. Procédé selon l'une quelconque des revendications 1 ou 2, dans lequel le nombre de classes ($K$) est ajusté à chaque itération ($g$).

4. Procédé selon la revendication 3, selon lequel à chaque itération ($g$), l'étape c) comporte une étape de recherche d'une classe vide, ne comportant aucun temps de rétention, une telle classe étant alors supprimée.

5. Procédé selon l'une quelconque des revendications précédentes, dans lequel l'étape c) est effectuée par inférence bayésienne.

6. Procédé selon la revendication 5, dans lequel l'étape c) est effectuée par inférence bayésienne non paramétrique.

7. Procédé selon l'une quelconque des revendications précédentes, dans lequel lors de l'étape c), ladite pluralité des temps de rétention est modélisée selon un modèle de mélange de processus de Dirichlet, ledit modèle étant paramétré par ladite distribution de base ($G_0$) et par un facteur d'échelle ($\alpha$).

8. Procédé selon la revendication 7, dans lequel le facteur d'échelle ($\alpha$) étant distribué selon une loi paramétrique, sa valeur est inférée à chaque itération par tirage selon ladite loi paramétrique.

9. Procédé selon l'une quelconque des revendications précédentes selon lequel à chaque itération ($g$), au cours de l'étape c), la classification est réalisée par un tirage selon une loi multinomiale dont les paramètres comprennent les probabilités a posteriori d'appartenance à chaque classe $\left(p\left(z_i^g = k | \boldsymbol{z}_{-i}^g, \boldsymbol{t}_R, \alpha, G_0\right)\right)$.

10. Procédé selon l'une quelconque des revendications précédentes, dans lequel lors de l'étape c), la détermination de ladite probabilité a posteriori d'appartenance à chaque classe $p(z_i^g = k | \boldsymbol{z}_{-i}^g, \boldsymbol{t}_R, \alpha, G_0)$ comporte la détermination :

- de lois de probabilités a priori $p\left(z_i^g = k | \boldsymbol{z}_{-i}^g, \alpha\right)$ d'appartenance de ladite particule ($i$) à chaque classe ($k$) préalablement définie, connaissant $p\left(t_i \,\middle|\, \boldsymbol{t}_{R,-i}, z_i^g = k, \boldsymbol{z}_{-i}^g, G_0\right)$ res particules $\left(\boldsymbol{z}_{-i}^g\right)$ ;

- de lois de probabilités a posteriori d'observation du temps de rétention ($t_i$) de

ladite particule (*i*) connaissant les temps de rétention des autres particules (**$t_{R,\text{-}i}$**), ainsi que leurs classes respectives $\left(\mathbf{z}^g_{-i}\right)$, chaque probabilité étant successivement calculée en considérant que ladite particule (*i*) appartient à chaque classe (k) ;

**11.** Procédé selon l'une quelconque des revendications précédentes, dans lequel l'étape c) comporte également la détermination, pour chaque temps de rétention (*$t_i$*), d'une probabilité a posteriori $p(z^g_i = K + 1 | \mathbf{z}^g_{-i}, \mathbf{t_R}, \alpha, G_0)$ d'appartenance à une classe *(K + 1)* supplémentaire par rapport aux classes (1...k...K) préalablement définies.

**12.** Procédé selon la revendication 11, dans lequel la détermination de ladite probabilité a posteriori $p(z^g_i = K + 1 | \mathbf{z}^g_{-i}, \mathbf{t_R}, \alpha, G_0)$ d'appartenance à une classe *(K + 1)* supplémentaire comporte la détermination :

- d'une loi de probabilité a priori $p\left(z^g_i = K + 1 | \mathbf{z}^g_{-i}, \alpha\right)$ d'appartenance de ladite particule (*i*) à une classe *(K + 1)* supplémentaire par rapport aux classes (1 *... k ... K*) préalablement définies, connaissant les classes respectives des autres particules $\left(\mathbf{z}^g_{-i}\right)$ ;
- d'une loi de probabilité a posteriori d'observation $p(t_i | \mathbf{t}_{R,-i}, z^g_i = K + 1, \mathbf{z}^g_{-i}, G_0)$ du temps de rétention (*$t_i$*) de ladite particule (*i*) connaissant les temps de rétention des autres particules (**$t_{R,\text{-}i}$**) ainsi que leurs classes respectives $\left(\mathbf{z}^g_{-i}\right)$, cette probabilité étant calculée en considérant que ladite particule appartient à ladite classe supplémentaire *(K + 1)*.

**13.** Procédé selon l'une quelconque des revendications précédentes, dans lequel l'étape e) comprend également l'estimation des paramètres $\left(\widehat{\boldsymbol{\theta}^*_k}\right)$ d'au moins une classe à partir des paramètres $\left(\boldsymbol{\theta}^{*g}_k\right)$ estimés lors de l'étape d).

**14.** Procédé selon l'une quelconque des revendications précédentes, comportant une étape f) d'identification d'au moins une classe cible (*I*), correspondant à une particule déterminée a priori, dite particule cible, à chaque particule cible étant associée une distribution de temps de rétention dont des paramètres (*$\theta_I$*) sont connus, l'identification étant réalisée au moyen d'une comparaison entre au moins un paramètre $\left(\widehat{\boldsymbol{\theta}^*_k}\right)$ associé à chaque classe (k) et au moins un desdits paramètre (*$\theta_I$*) associé à ladite particule cible.

**15.** Support d'enregistrement d'informations, comportant des instructions pour l'exécution des étapes b) à d) d'un procédé selon l'une quelconque des revendications 1 à 14, ces instructions étant aptes à être exécutées par un processeur (30), lesdites étapes b) à d) utilisant un chromatogramme formé selon l'étape a) dudit procédé.

**16.** Dispositif d'analyse (1) d'un échantillon liquide ou gazeux, comportant une pluralité de particules (*i*), le dispositif comportant :

- une colonne de chromatographie (10), s'étendant entre une entrée (in) et une sortie (out), apte à être traversée par l'échantillon, la colonne comprenant une paroi (12) comportant une phase stationnaire (13) apte à adsorber et désorber lesdites particules ;
- un détecteur (20), disposé à la sortie de la colonne, apte à générer un signal (S) représentatif d'une quantité de particules ayant traversé ladite colonne en fonction du temps;
- un processeur (30), configuré pour traiter le signal généré par le détecteur, et pour mettre en oeuvre un procédé objet de l'une quelconque des revendications 1 à 14.

**Patentansprüche**

**1.** Verfahren zum Schätzen einer Menge von Teilchen, die in einer Probe vorhanden sind, umfassend die folgenden Schritte:

a) Durchleiten der Probe durch eine Chromatographiesäule, wobei die Säule einen Detektor umfasst, der in der Lage ist, die Teilchen zu detektieren, wobei der Detektor ein Chromatogramm liefert, das die Anzahl der Teilchen darstellt, die in Abhängigkeit von einer Retentionszeit detektiert wurden, die repräsentativ für die von jedem Teilchen in der Säule verbrachte Zeit ist;

b) Bilden einer Liste, die eine Vielzahl von Retentionszeiten umfasst, wobei jede Retentionszeit einem individuellen Teilchen zugeordnet ist, wobei die Liste zufallsgesteuert aus dem Chromatogramm erstellt wird;

c) Durchführen einer Klassifizierung jeder Retentionszeit der Liste gemäß einer Vielzahl von Klassen, wobei jeder Klasse eine A-priori-Verteilung von Retentionszeiten $(p(t ; \theta_k^{*g}))$ zugeordnet ist, definiert durch Parameter $(\theta_k^{*g})$, wobei die Parameter $(\theta_k^{*g})$ gemäß einer vorbestimmten Basisverteilung ($G_0$) verteilt sind, wobei der Schritt c) für jede Retentionszeit ($t_i$) eine Bestimmung einer A-posteriori-Wahrscheinlichkeit der Zugehörigkeit zu jeder Klasse $p(z_i^g = k | \boldsymbol{z}^g_{:}, \boldsymbol{t}_R, \alpha, G_0)$ umfasst;

d) Schätzen einer Menge oder eines Anteils $(C_k^g)$ von Teilchen, deren Retentionszeit gemäß mindestens einer der in Schritt c) definierten Klassen (1 ... k ... K) klassifiziert ist;

wobei die Schritte c) bis d) iterativ durchgeführt werden, bis ein Stoppkriterium erfüllt ist.

2. Verfahren nach Anspruch 1, wobei Schritt c) das Erstellen eines Zustandsvektors ($\boldsymbol{z^g}$), umfasst, wobei jeder Term $(z_i^g)$ eine Klasse der Zugehörigkeit zu einer Retentionszeit ($t_i$), darstellt, wobei der Zustandsvektor bei jeder Iteration (g) aktualisiert wird.

3. Verfahren nach einem der Ansprüche 1 oder 2, wobei die Anzahl der Klassen (K) bei jeder Iteration(g) angepasst wird.

4. Verfahren nach Anspruch 3, wobei bei jeder Iteration (g) Schritt c) einen Schritt der Suche einer leeren Klasse ohne Retentionszeit umfasst, wobei eine solche Klasse daraufhin gelöscht wird.

5. Verfahren nach einem der vorangehenden Ansprüche, wobei Schritt c) durch Bayessche Inferenz durchgeführt wird.

6. Verfahren nach Anspruch 5, wobei Schritt c) durch nichtparametrische Bayessche Inferenz durchgeführt wird.

7. Verfahren nach einem der vorangehenden Ansprüche, wobei in Schritt c) die Vielzahl von Retentionszeiten gemäß einem Mischmodell des Dirichlet-Prozesses modelliert wird, wobei das Modell durch die Basisverteilung ($G_0$) und einen Skalierungsfaktor ($\alpha$) parametrisiert wird.

8. Verfahren nach Anspruch 7, bei dem der Skalierungsfaktor ($\alpha$) gemäß einem parametrischen Gesetz verteilt wird, wobei sein Wert bei jeder Iteration durch Ziehung gemäß dem parametrischen Gesetz abgeleitet wird.

9. Verfahren nach einem der vorangehenden Ansprüche, wonach bei jeder Iteration (g) in Schritt c) die Klassifizierung durch Ziehung gemäß einem multinomialen Gesetz durchgeführt wird, dessen Parameter die A-posteriori-Wahrscheinlichkeiten der Zugehörigkeit zu jeder Klasse $(p\left(z_i^g = k | \boldsymbol{z}^g_{-i}, \boldsymbol{t}_R, \alpha, G_0\right))$ umfassen.

10. Verfahren nach einem der vorangehenden Ansprüche, wobei in Schritt c) die Bestimmung der A-posteriori-Wahrscheinlichkeit der Zugehörigkeit zu jeder Klasse $(p\left(z_i^g = k | \boldsymbol{z}^g_{-i}, \boldsymbol{t}_R, \alpha, G_0\right))$ die Bestimmung des Folgenden umfasst:

- A-priori-Wahrscheinlichkeits-Gesetze $p(z_i^g = k | \boldsymbol{z}^g_{-i}, \alpha)$ der Zugehörigkeit des Teilchens *(i)* zu jeder zuvor definierten Klasse (*k*), wobei die jeweiligen Klassen der anderen Teilchen $(\boldsymbol{z}^g_{-i})$ bekannt sind;

- A-posteriori-Wahrscheinlichkeits-Gesetze $p(t_i | \boldsymbol{t}_{R,-i}, z_i^g = k, \boldsymbol{z}^g_{-i}, G_0)$ des Beobachtens der Retentionszeit ($t_i$) des Teilchens (*i*), wobei die Retentionszeiten der anderen Teilchen ($\boldsymbol{t}_{R,-i}$) sowie deren jeweilige

Klassen $\left(\boldsymbol{z}_{-\boldsymbol{i}}^{\boldsymbol{g}}\right)$ bekannt sind, wobei jede Wahrscheinlichkeit unter der Annahme, dass das Teilchen *(i)* zu jeder Klasse (*k*) gehört, nacheinander berechnet wird;

**11.** Verfahren nach einem der vorangehenden Ansprüche, wobei Schritt c) für jede Retentionszeit ($t_i$) auch die Bestimmung einer A-posteriori-Wahrscheinlichkeit $p(z_i^g = K + 1 | \boldsymbol{z}_{-\boldsymbol{i}}^{\boldsymbol{g}}, \boldsymbol{t}_{\boldsymbol{R}}, \alpha, G_0)$ der Zugehörigkeit zu einer Klasse *(K + 1)* zusätzlich zu den zuvor definierten Klassen (1 ... *k ... K*) umfasst.

**12.** Verfahren nach Anspruch 11, wobei die Bestimmung der A-posteriori-Wahrscheinlichkeit $p(z_i^g = K + 1 | \boldsymbol{z}_{-\boldsymbol{i}}^{\boldsymbol{g}}, \boldsymbol{t}_{\boldsymbol{R}}, \alpha, G_0)$ der Zugehörigkeit zu einer zusätzlichen Klasse (*K* + 1) die Bestimmung des Folgenden umfasst:

- ein A-priori-Wahrscheinlichkeits-Gesetz $p(z_i^g = K + 1 | \boldsymbol{z}_{-\boldsymbol{i}}^{\boldsymbol{g}}, \alpha)$ der Zugehörigkeit des Teilchens (*i*) zu einer Klasse (*K* + 1) zusätzlich zu den zuvor definierten Klassen (1 ... k ... K), wobei die jeweiligen Klassen der anderen Teilchen $\left(z^{g}{}_{-i}\right)$ bekannt sind;
- ein A-posteriori-Wahrscheinlichkeits-Gesetz $p(t_i | \boldsymbol{t}_{\boldsymbol{R},-\boldsymbol{i}}, z_i^g = K + 1, \boldsymbol{z}_{-\boldsymbol{i}}^{\boldsymbol{g}}, G_0)$ des Beobachtens der Retentionszeit ($t_i$) des Teilchens (i), wobei die Retentionszeiten der anderen Teilchen ($\boldsymbol{t}_{\boldsymbol{R},-\boldsymbol{i}}$) sowie deren jeweilige Klassen $\left(z^{g}{}_{-i}\right)$ bekannt sind, wobei diese Wahrscheinlichkeit unter der Annahme berechnet wird, dass das Teilchen zu der zusätzlichen Klasse (K + 1) gehört.

**13.** Verfahren nach einem der vorangehenden Ansprüche, wobei Schritt e) auch das Schätzen der Parameter $\left(\widehat{\boldsymbol{\theta}_{\boldsymbol{k}}^{*}}\right)$ mindestens einer Klasse ausgehend von den in Schritt d) geschätzten Parametern $\left(\boldsymbol{\theta}_{\boldsymbol{k}}^{*\boldsymbol{g}}\right)$ umfasst.

**14.** Verfahren nach einem der vorangehenden Ansprüche, umfassend einen Schritt f) des Identifizierens mindestens einer Zielklasse (*l*), die einem a priori bestimmten Teilchen entspricht, Zielteilchen genannt, wobei jedem Zielteilchen eine Retentionszeitverteilung zugeordnet ist, deren Parameter ($\theta_l$) bekannt sind, wobei die Identifizierung mittels eines Vergleichs zwischen mindestens einem jeder Klasse (k) zugeordneten Parameter $\left(\widehat{\boldsymbol{\theta}_{\boldsymbol{k}}^{*}}\right)$ und mindestens einem dem Zielteilchen zugeordneten Parameter ($\theta_l$) durchgeführt wird.

**15.** Informationsaufzeichnungsmedium, umfassend Anweisungen zum Durchführen der Schritte b) bis d) eines Verfahrens nach einem der Ansprüche 1 bis 14, wobei die Anweisungen von einem Prozessor (30) ausgeführt werden können, wobei die Schritte b) bis d) ein Chromatogramm verwenden, das gemäß Schritt a) des Verfahrens gebildet wurde.

**16.** Analysevorrichtung (1) für eine flüssige oder gasförmige Probe, umfassend eine Vielzahl von Teilchen (i), wobei die Vorrichtung umfasst:

- eine Chromatographiesäule (10), die sich zwischen einem Einlass (in) und einem Auslass (out) erstreckt und von der Probe durchquert werden kann, wobei die Säule eine Wand (12) mit einer stationären Phase (13) aufweist, die in der Lage ist, die Teilchen zu adsorbieren und zu desorbieren;
- einen Detektor (20) am Auslass der Säule, der in der Lage ist, ein Signal (S) zu erzeugen, das repräsentativ für eine Menge von Teilchen ist, die die Säule in Abhängigkeit von der Zeit durchlaufen haben;
- einen Prozessor (30), der dazu konfiguriert ist, das von dem Detektor erzeugte Signal zu verarbeiten und ein Verfahren durchzuführen, das Gegenstand eines der Ansprüche 1 bis 14 ist.

**Claims**

**1.** Method for estimating a quantity of particles present in a sample, comprising the following steps:

a) passing the sample through a chromatography column, the column comprising a detector capable of detecting the said particles, the detector providing a chromatogram representing the number of particles detected as a function of a retention time, representative of the time spent by each particle in the column;

b) constituting a list comprising a plurality of retention times, each retention time being associated with an individual particle, the list being established by random selection from the chromatogram;

c) carrying out a classification of each retention time on the list according to a plurality of classes, with each class there being associated an a priori distribution of the retention times $\left(p\left(t;\boldsymbol{\theta}_k^{*g}\right)\right)$ defined by parameters $\left(\boldsymbol{\theta}_k^{*g}\right)$, the parameters $\left(\boldsymbol{\theta}_k^{*g}\right)$ being distributed according to a predetermined base distribution ($G_0$), the step c) comprising a determination, for each retention time ($t_i$), of an a posteriori probability of belonging to each class $\left(p(z_i^g = k|\boldsymbol{z}_{-i}^g, \boldsymbol{t}_R, \alpha, G_0)\right)$

d) estimating a quantity or a proportion $\left(C_k^g\right)$ of particles whose retention time is classified according to at least one of the classes (1... $k$ ... $K$) defined during the step c);

the steps c) to d) being carried out in an iterative manner until an endpoint criterion is reached.

2. Method according to Claim 1 in which the step c) comprises the establishment of a state vector ($\boldsymbol{z}^g$), each term $\left(z_i^g\right)$ of which represents a membership class for a retention time ($t_i$), the said state vector being updated at each iteration ($g$).

3. Method according to either of Claims 1 and 2, in which the number of classes (K) is adjusted at each iteration ($g$).

4. Method according to Claim 3, according to which, at each iteration ($g$), the step c) comprises a step for searching for an empty class, not comprising any retention time, such a class then being eliminated.

5. Method according to any one of the preceding claims, in which the step c) is carried out by Bayesian inference.

6. Method according to Claim 5, in which the step c) is carried out by non-parametric Bayesian inference.

7. Method according to any one of the preceding claims, in which, during the step c), the said plurality of retention times is modelled according to a Dirichlet process mixture model, the said model being parameterized by the said base distribution ($G_0$) and by a scale factor ($\alpha$).

8. Method according to Claim 7, in which, the scale factor ($\alpha$) being distributed according to a parametric law, its value is inferred at each iteration by selection according to the said parametric law.

9. Method according to any one of the preceding claims, according to which, at each iteration ($g$), during the step c), the classification is carried out by a selection according to a multinomial law whose parameters comprise the a posteriori probabilities of belonging to each class $\left(p\left(z_i^g = k|\boldsymbol{z}_{-i}^g, \boldsymbol{t}_R, \alpha, G_0\right)\right)$.

10. Method according to any one of the preceding claims, in which, during the step c), the determination of the said a posteriori probability of belonging to each class $p(z_i^g = k|\boldsymbol{z}_{-i}^g, \boldsymbol{t}_R, \alpha, G_0)$ comprises the determination:

- of a priori probability laws $\left(p(z_i^g = k|\boldsymbol{z}_{-i}^g, \alpha)\right)$ for the said particle ($i$) belonging to each class ($k$) previously defined, knowing the respective
- of a posteriori probability laws $\left(p(t_i \mid \boldsymbol{t}_{R,-i}, z_i^g = k, \boldsymbol{z}_{-i}^g, G_0)\right)$ for observation of the retention time ($t_i$) of the said particle ($i$) knowing the retention times of the other particles ($\boldsymbol{t}_{R,-i}$) together with their respective classes $\left(\boldsymbol{z}_{-i}^g\right)$, each probability being successively calculated by considering that the said particle ($i$) belongs to each class ($k$).

11. Method according to any one of the preceding claims, in which the step c) also comprises the determination, for each retention time ($t_i$), of an a posteriori probability $\left(p\left(z_i^g = K + 1 \middle| \boldsymbol{z_{-i}^g}, \boldsymbol{t_R}, \alpha, G_0\right)\right)$ of belonging to a class ($K + 1$) that is additional with respect to the classes (1...k...K) previously defined.

12. Method according to Claim 11, in which the determination of the said a posteriori probability $\left(p\left(z_i^g = K + 1 \middle| \boldsymbol{z_{-i}^g}, \boldsymbol{t_R}, \alpha, G_0\right)\right)$ of belonging to an additional class ($K + 1$) comprises the determination:

- of a law of a priori probability $\left(p\left(z_i^g = K + 1 \middle| \boldsymbol{z_{-i}^g}, \alpha\right)\right)$ of the said particle ($i$) belonging to an additional class ($K + 1$) with respect to the classes ($1 \dots k \dots K$) previously defined, knowing the respective classes of the other particles $\left(\boldsymbol{z_{-i}^g}\right)$;
- of a law of a posteriori probability of observing $\left(p\left(t_i \middle| \boldsymbol{t_{R,-i}}, z_i^g = K + 1, \boldsymbol{z_{-i}^g}, G_0\right)\right)$ the retention time ($t_i$) of the said particle ($i$) knowing the retention time of the other particles ($\boldsymbol{t_{R,-i}}$), together with their respective classes $\left(\boldsymbol{z_{-i}^g}\right)$, this probability being calculated by considering that the said particle belongs to the said additional class ($K + 1$).

13. Method according to any one of the preceding claims, in which the step e) also comprises the estimation of the parameters $\left(\widehat{\boldsymbol{\theta_k^*}}\right)$ of at least one class using the parameters $\left(\boldsymbol{\theta_k^{*g}}\right)$ estimated during the step d).

14. Method according to any one of the preceding claims, comprising a step f) for identification of at least one target class ($l$), corresponding to a particle determined a priori, referred to as target particle, with each target particle there being associated a distribution of retention times whose parameters ($\theta_l$) are known, the identification being carried out by means of a comparison between at least one parameter $\left(\widehat{\boldsymbol{\theta_k^*}}\right)$ associated with each class ($k$) and at least one of the said parameter ($\theta_l$) associated with the said target particle.

15. Information recording medium, comprising instructions for the execution of the steps b) to d) of a method according to any one of Claims 1 to 14, these instructions being designed to be executed by a processor (30), the said steps b) to d) using a chromatogram formed according to the step a) of the said method.

16. Device (1) for analysing a liquid or gaseous sample, comprising a plurality of particles (i), the device comprising:

- a chromatography column (10), extending between an entry (in) and an exit (out), designed to be traversed by the sample, the column comprising a wall (12) comprising a stationary phase (13) able to adsorb and to desorb the said particles;
- a detector (20), disposed at the exit of the column, designed to generate a signal (S) representative of a quantity of particles having passed through the said column as a function of time;
- a processor (30), designed to process the signal generated by the detector, and to implement a method being the subject of any one of Claims 1 to 14.

**Fig. 1**

**Fig. 2**

**Fig. 3**

Fig.4A

220

```
┌──────────┐
│   221    │
└──────────┘
     │  $p(z_i^g = k | \mathbf{z}_{-i}^{\boldsymbol{g}}, \alpha)$
     ▼
┌──────────┐
│   222    │
└──────────┘
     │  $p(t_i | \mathbf{t}_{\boldsymbol{R},-\boldsymbol{i}}, z_i^g = k, \mathbf{z}_{-i}^{\boldsymbol{g}}, G_0)$
     ▼
┌──────────┐
│   223    │
└──────────┘
     │  $p(z_i^g = k | \mathbf{z}_{-i}^{\boldsymbol{g}}, \mathbf{t}_{\boldsymbol{R}}, \alpha, G_0)$
     ▼
```

**Fig.4B**

230

```
┌──────────┐
│   231    │
└──────────┘
     │  $p\big(z_i^g = K + 1 | \mathbf{z}_{-i}^{\boldsymbol{g}}, \alpha\big)$
     ▼
┌──────────┐
│   232    │
└──────────┘
     │  $p(t_i | \mathbf{t}_{\boldsymbol{R},-\boldsymbol{i}}, z_i^g = K + 1, \mathbf{z}_{-i}^{\boldsymbol{g}}, G_0)$
     ▼
┌──────────┐
│   233    │
└──────────┘
     │  $p(z_i^g = K + 1 | \mathbf{z}_{-i}^{\boldsymbol{g}}, \mathbf{t}_{\boldsymbol{R}}, \alpha, G_0)$
     ▼
```

**Fig.4C**

**Fig.5A**

**Fig.5B**

## RÉFÉRENCES CITÉES DANS LA DESCRIPTION

**Documents brevets cités dans la description**

- EP 2028486 A
- EP 2509018 A